# EUROPÄISCHE PATENTSCHRIFT

(11) **EP 2 361 717 B1**
(45) Veröffentlichungstag und Bekanntmachung des Hinweises auf die Patenterteilung: **20.03.2013**
(21) Anmeldenummer: 11150087.2
(22) Anmeldetag: 04.01.2011
(51) Int. Cl.: B23K 26/073, B23K 26/04, B23K 26/03

(54) **Laserstrahlschweißeinrichtung und Verfahren zum Betreiben einer Laserstrahlschweißeinrichtung**
Laser beam welding device and method for operating same
Installation de soudage au rayon laser et procédé de fonctionnement d'une installation de soudage au rayon laser

(30) Priorität: 23.02.2010 DE 102010002255
(43) Veröffentlichungstag der Anmeldung: 31.08.2011
(73) Patentinhaber: Robert Bosch GmbH, 70442 Stuttgart (DE)
(72) Erfinder: Birnesser, Andreas Josef, 70499 Weilimdorf (DE); Keller, Thomas, 77815 Bühl (DE)

(56) Entgegenhaltungen:
- DE-A1-102007 035 715
- US-A1- 2006 000 812

## Beschreibung

### Stand der Technik

Die Erfindung betrifft eine Laserstrahlschweißeinrichtung sowie ein Verfahren zum Betreiben einer Laserstrahlschweißeinrichtung nach den Oberbegriffen der unabhängigen Ansprüche.

Eine derartige Laserstrahlschweißeinrichtung sowie ein derartiges Verfahren zum Betreiben einer Laserstrahlschweißeinrichtung sind aus der DE 10 2007 035 717 A1 bekannt. Mittels der bekannten Laserstrahlschweißeinrichtung lässt sich ein ringförmiger Laserstrahl erzeugen, der in einer Fügezone zweier Bauteilen die beiden Bauteile durch Aufschmelzen des Materials und nachfolgender Erstarrung fest miteinander verbindet bzw. verschweißt. Aus der DE 10 2007 035 717 A1 ist es ferner bekannt, zu Beobachtungszwecken und zur Auswertung und ggf. Verstellung einzelner Optikelemente eine zusätzliche Ablenkoptik vorzusehen, die im Strahlengang zwischen einem Kollimator und einem Axikon angeordnet ist. Nähere Angaben bezüglich der Auswertung bzw. Verstellung sind jedoch in der DE 10 2007 035 717 A1 nicht offenbart.

Aus der DE 10 2007 035 715 A1 ist eine Laserstrahlbearbeitungsvorrichtung mit einer Laserstrahlquelle zum Beaufschlagen eines Wallstückt mit einem ringförmigen Laserfokus.

Die US 2006/0000812 A1 offenbart ein Verfahren und eine Vorrichtung zum verbinden von zwei Komponenten mittels eines Laserstrahls.

Kritisch bei derartigen Laserstrahlschweißeinrichtungen bzw. deren Betriebsverfahren ist oftmals, dass die Bauteile im Bereich der Fügezone ungleichmäßig erwärmt werden, was nach dem Erstarren der Fügezone zu Verzügen in den Bauteilen führen kann. Zwar wird bereits durch den Einsatz des ringförmigen Laserstrahls eine relativ gleichmäßige Erwärmung der Fügezone erreicht, sodass die Neigung zu Verzügen herabgesetzt ist. Jedoch ist es im Rahmen ständig erforderlicher Verbesserungen und der Reduzierung von Bauteilgrößen bzw. Dicken von Bauteilen nicht ausgeschlossen, dass es auch beim Einsatz ringförmiger Laserstrahlen zu Verzügen kommen kann.

### Offenbarung der Erfindung

Ausgehend von dem dargestellten Stand der Technik liegt der Erfindung die Aufgabe zugrunde, eine Laserstrahlschweißeinrichtung sowie ein Verfahren zum Betreiben einer Laserstrahlschweißeinrichtung nach den Oberbegriffen der unabhängigen Ansprüche derart weiterzubilden, dass sich abzeichnende Verzüge in den Bauteilen zumindest schneller erfassen lassen, um ggf. Gegenmaßnahmen ergreifen zu können. Diese Aufgabe wird bei einer Laserstrahlschweißeinrichtung bzw. einem Verfahren zum Betreiben einer Laserstrahlschweißeinrichtung mit den Merkmalen der unabhängigen Ansprüche gelöst. Der Erfindung liegt dabei die Idee zugrunde, die Fügezone nicht nur insgesamt mittels der zusätzlichen Ablenkoptik zu erfassen bzw. auszuwerten, sondern den ringförmigen Bereich in einzelne Teilbereiche zu unterteilen, die separat voneinander erfasst und ausgewertet werden können. Diese exakte Auswertung schafft die Voraussetzung für eine Regelung des Laserstrahlschweißens, um Verzüge zu vermeiden.

Vorteilhafte Weiterbildungen der erfindungsgemäßen Laserstrahlschweißeinrichtung sowie des Verfahrens zum Betreiben einer Laserstrahlschweißeinrichtung sind in den jeweiligen abhängigen Ansprüchen angegeben. In den Rahmen der Erfindung fallen sämtliche Kombinationen aus zumindest zwei von in den Ansprüchen, der Beschreibung und/oder den Figuren offenbarten Merkmalen.

Um den Bereich der Fügezone gezielt zu beeinflussen bzw. die Voraussetzungen dafür zu schaffen, dass die Fügezone in einer derartigen Art und Weise mittels des Laserstrahls beeinflusst wird, dass nach dem Verschweißen der Bauteile keine Verzüge auftreten, ist es in einer bevorzugten Ausgestaltung der Erfindung vorgesehen, dass die Auswerteeinrichtung zumindest mittelbar mit einer Regeleinrichtung gekoppelt ist, wobei die Regeleinrichtung insbesondere eine Verstelleinrichtung zur Verstellung der Optik bzw. eine Ansteuereinrichtung zur Erzeugung des Laserstrahls bzw. eine weitere Verstelleinrichtung zum Positionieren zumindest eines Bauteils bzw. wenigstens eine insbesondere als Blende ausgebildete Optik zur Beeinflussung des Laserstrahls in einem Teilbereich seiner ringförmigen Fläche umfasst. Hierbei können die einzelnen angesprochenen Maßnahmen sowohl separat als auch in Kombination miteinander Anwendung finden.

Erfindungsgemäß ist es vorgesehen, dass die Auswerteeinrichtung wenigstens ein Sensorelement, insbesondere eine Photodiode, aufweist. Mittels eines derartigen Sensorelements lässt sich der betreffende Teilbereich bzw. die betreffenden Teilbereiche der ringförmigen Fügezone, z.B. mittels Bildverarbeitungsprogrammen, relativ einfach und exakt analysieren.

Ferner ist erfindungsgemäß dabei vorgesehen, dass eine Vielzahl von Sensorelementen vorgesehen ist, die jeweils einen Bereich der ringförmigen Fügezone erfassen. Hierbei lässt sich durch die Anzahl der vorgesehenen Sensorelemente die Auflösung vergrößern bzw. die ringförmige Fügezone in beliebig kleine Teilbereiche unterteilen und analysieren.

Eine erfindungsgemäße Anordnung der Sensorelemente ergibt sich, wenn diese radial um die zusätzliche Auslenkoptik angeordnet sind.

Insbesondere kann es dabei vorgesehen sein, dass die zusätzliche Auslenkoptik einen kegelförmigen Spiegel umfasst, dass der kegelförmige Spiegel zwischen einer Kollimationslinse und einer Fokusierlinse der Optik angeordnet ist und, dass jedes Sensorelement mit einer Fokusierlinse zusammenwirkt, die radial zwischen dem kegelförmigen Spiegel und dem wenigstens einen Sensorelement angeordnet ist.

In einer alternativen konstruktiven Ausgestaltung ist es jedoch auch möglich, dass die zusätzliche Auslenkoptik einen konkav ausgebildeten Spiegel umfasst, dass der konkav ausgebildete Spiegel zwischen einer Kollimationslinse und einer Fokusierlinse der Optik angeordnet ist und, dass der konkav ausgebildete Spiegel radial innerhalb des wenigstens einen Sensorelements angeordnet ist.

In einer weiteren konstruktiven Alternative hierzu ist es auch möglich, dass die zusätzliche Auslenkoptik einen kegelförmig ausgebildeten Spiegel umfasst, dass der kegelförmig ausgebildete Spiegel zwischen einer Kollimationslinse und einer Fokusierlinse der Optik angeordnet ist, dass der kegelförmig ausgebildete Spiegel die erfasste Strahlung im Bereich der Fügezone auf die Fokusierlinse zurückreflektiert und, dass das Sensorelement auf der dem Spiegel gegenüberliegenden Seite der Fokusierlinse angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine schematische Darstellung einer Laserstrahlschweißeinrichtung zur Erzeugung ringförmiger Laserstrahlen bzw. ringförmiger Fügezonen,
- Fig. 2: eine erste Ausführungsform einer erfindungsgemäßen Laserstrahlschweißeinrichtung mit radial um einen kegelförmigen Spiegel angeordneten Sensorelementen,
- Fig. 3: die Anordnung der Sensorelemente gemäß der Fig. 2 in einer perspektivischen Darstellung,
- Fig. 4: eine gegenüber der Fig. 2 abgewandelte zweite erfindungsgemäße Laserstrahlschweißeinrichtung ohne Verwendung von Fokusierlinsen in vereinfachter Darstellung und
- Fig. 5: eine dritte erfindungsgemäße Laserstrahlschweißeinrichtung, ebenfalls in vereinfachter Darstellung.

Gleiche Bauteile bzw. Bauteile mit gleicher Funktion sind in den Figuren mit denselben Bezugsziffern versehen.

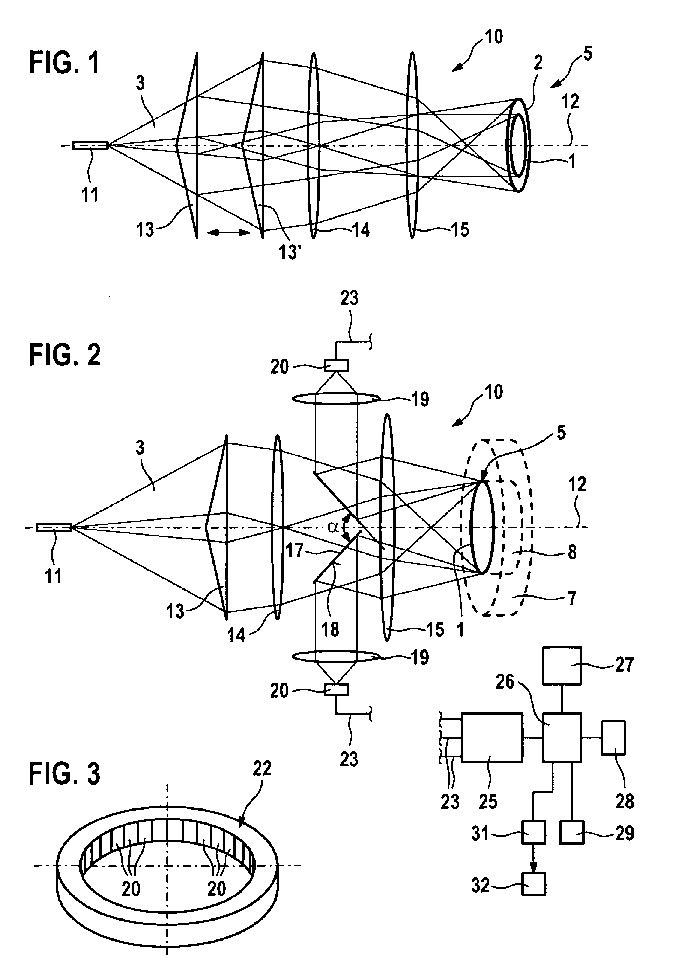

In der Fig. 1 ist ein Teil einer ersten erfindungsgemäßen Laserstrahlschweißeinrichtung 10 dargestellt, wie sie zum Verschweißen zweier Bauteile dient. Hierbei soll anhand der Fig. 1 lediglich der prinzipielle Aufbau bzw. die prinzipielle Funktionsweise einer erfindungsgemäßen Laserstrahlschweißeinrichtung 10 zur Erzeugung ringförmiger Laserstrahlen 1, 2 im Bereich einer Fügezone 5 erläutert werden. Dabei wird ein insbesondere gepulster Laserstrahl 3 mittels einer Laserstrahlquelle 11 erzeugt, dessen Strahlenbündel über ein entlang einer Längsachse 12 verschiebbares Axikon 13, eine ortsfeste Kollimationslinse 14 und eine ortsfeste Fokussierlinse 15 derart bearbeitet, dass die ringförmigen Laserstrahlen 1 bzw. 2 erzeugt werden. Hierbei ist in der Fig. 1 das Axikon 13 in seiner bezüglich der Längsachse 12 linken Endposition dargestellt, welches zur Erzeugung des Laserstrahls 1 mit dem kleinsten Ringdurchmesser führt, während das Axikon 13' die Position des Axikons 13' wiedergibt, wenn sich dieses in Bezug auf die Längsachse 12 in seiner rechten Endposition befindet, um damit den im Durchmesser größten Laserstrahl 2 erzeugen zu können. Hierbei sind die Laserstrahlen 1 bzw. 2 durch die Fokusierlinse 15 in einer Ebene fokussiert, welche als Fügezone 5 bezeichnet wird. In dieser Fügezone 5 befinden sich auch zwei miteinander zu verschweißende Bauteile 7, 8 (siehe Fig. 2), bei denen im Bereich der Fügezone 5 das Material aufgeschmolzen wird, wobei nach dem Aufschmelzen im Bereich der Fügezone 5 bzw. dem Erstarren des Materials die beiden Bauteile 7, 8 fest miteinander verbunden sind. Hierbei ist das eine Bauteil 7 beispielhaft als Ring ausgebildet, in dessen Öffnung das zylindrische Bauteil 8 eingepasst ist.

In den Fig. 2, 4 und 5 ist jeweils eine Position des Axikons 13 entlang der Längsachse 12 dargestellt. Hierbei soll jedoch keine spezielle Position des Axikons 13 gemeint sein, vielmehr können alle Positionen des Axikons 13, 13' entsprechend der Fig. 1 angenommen werden.

In der Fig. 2 erkennt man im Strahlengang des Laserstrahls 3 der Laserstrahlschweißeinrichtung 10 einen kegelförmigen Ablenkspiegel 17, der zwischen der Kollimationslinse 14 und der Fokusierlinse 15 angeordnet ist. Hierbei ist der Spiegel 17 derart ausgebildet, dass dieser von dem aus Richtung der Laserstrahlquelle 11 kommenden Laserstrahl 3 durchdringbar ist, während von der Fügezone 5 zurückreflektierte und durch die Fokusierlinse 15 auf die Spiegeloberfläche 18 auftreffende Laserstrahlen entsprechend den Brechungsgesetzen sowie der Geometrie der Spiegeloberfläche 18 radial nach außen reflektiert werden.

Im dargestellten Ausführungsbeispiel weist die Spiegeloberfläche 18 des Spiegels 17 beispielhaft einen Öffnungswinkel a von etwa 90° auf.

Der Spiegel 17 ist radial von einer Vielzahl von Linsen 19 umgeben, die die von der Spiegeloberfläche 18 reflektierten Laserstrahlen auf radial die Linsen 19 umgebende Sensorelemente 20 fokussieren. Hierbei handelt es sich bei den Sensorelementen 20 bevorzugt um Photodioden, es können jedoch auch zum Beispiel lichtleitende Fasern vorgesehen sein, welche die reflektierte Strahlung zu einer anderen Stelle der Laserstrahlschweißeinrichtung 10 führen.

In der Fig. 3 erkennt man die auf einen Kreis 22 angeordneten einzelnen Sensorelemente 20, welche jeweils einem bestimmten Umfangsbereich bzw. Winkelbereich der Fügezone 5 zuordenbar sind. Entsprechend wird beispielhaft bei einer dicht an dichten Anordnung von Sensorelementen 20 und einer Anzahl von sechsunddreißig Sensorelementen 20 mittels jedes Sensorelementes 20 ein Winkelbereich von 10° des Kreises 22 erfasst, welcher aufgrund der Reflexionsgesetze ebenfalls einen Winkelbereich von ca. 10° des kreisförmig ausgebildeten Laserstrahls 1 im Bereich der Fügezone 5 entspricht.

Die Sensorelemente 20 sind über Leitungen 23 mit einer Auswerteeinrichtung 25 gekoppelt. In der Auswerteeinrichtung 25 sind eine Vielzahl von Daten hinterlegt, welche charakteristisch für einen Laserstrahl 1 im Bereich der Fügezone 5 sind, wenn die Fügezone 5 insbesondere nicht zu Verzügen zwischen den Bauteilen 7 bzw. 8 führt. So weiß man beispielsweise, dass die Infrarotstrahlung mit der Einschweißtiefe in den Bauteilen 7, 8 korreliert. Weiterhin sind in der Auswerteeinrichtung 25 Daten bezüglich charakteristischer Signalverläufe (Anstiege/Abfälle) als Anhaltspunkte für den Prozessfortschritt zur Regelung und/oder Überwachung des Schweißprozesses hinterlegt. Die Auswerteeinrichtung 25 führt hierbei mittels Auswerteprogrammen einen Soll-/lst-Vergleich zwischen den von den Sensorelementen 20 erfassten ist-Messwerten und den vorgegebenen Soll-Werten durch.

Die Auswerteeinrichtung 25 ist mit einer Regeleinrichtung 26 gekoppelt. Hierbei dient die Regeleinrichtung 26 der Ansteuerung einer Verstelleinrichtung 27 für die Optik der Laserstrahlschweißeinrichtung 10, wobei die Optik sowohl die Verstellbarkeit des Axikons 13, als auch eine Verstellmöglichkeit der Kollimationslinse 14 und der Fokusierlinse 15 umfasst. Weiterhin ist die Regeleinrichtung 26 mit einer Ansteuereinrichtung 28 für die Laserstrahlquelle 11 gekoppelt. Mittels der Ansteuereinrichtung 28 lässt sich beispielsweise die Dauer der Ausbildung des Laserstrahls 3 beeinflussen bzw. steuern. Weiterhin kann die Regeleinrichtung 26 mit einer Positioniereinrichtung 29 zur Positionierung wenigstens eines der Bauteile 7 und 8 gekoppelt sein. Zuletzt ist die Regeleinrichtung 26 mit einer weiteren Verstelleinrichtung 31 zum Positionieren zumindest einer, insbesondere als Blende 32 ausgebildeten Optik zur Beeinflussung des Laserstrahls 3 in einem Teilbereich des ringförmigen Laserstrahls 1 bzw. der Fügezone 5 gekoppelt.

Die Auswerteeinrichtung 25 arbeitet mit der Regeleinrichtung 26 derart zusammen, dass aus einem ständigen Soll-/lst-Vergleich der von den Sensorelementen 20 erfassten, von der Fügezone 5 reflektierten Laserstrahlen 3 die Verstelleinrichtungen 27, 31 bzw. die Ansteuereinrichtung 28 oder aber die Positioniereinrichtung 29 derart ansteuert, dass die von den Sensorelementen 20 erfassten IstWerte den Soll-Werten entsprechen. Somit lässt sich eine in Bezug insbesondere auf Verzüge optimierte Laserstrahlbehandlung der Bauteile 7, 8 erzielen.

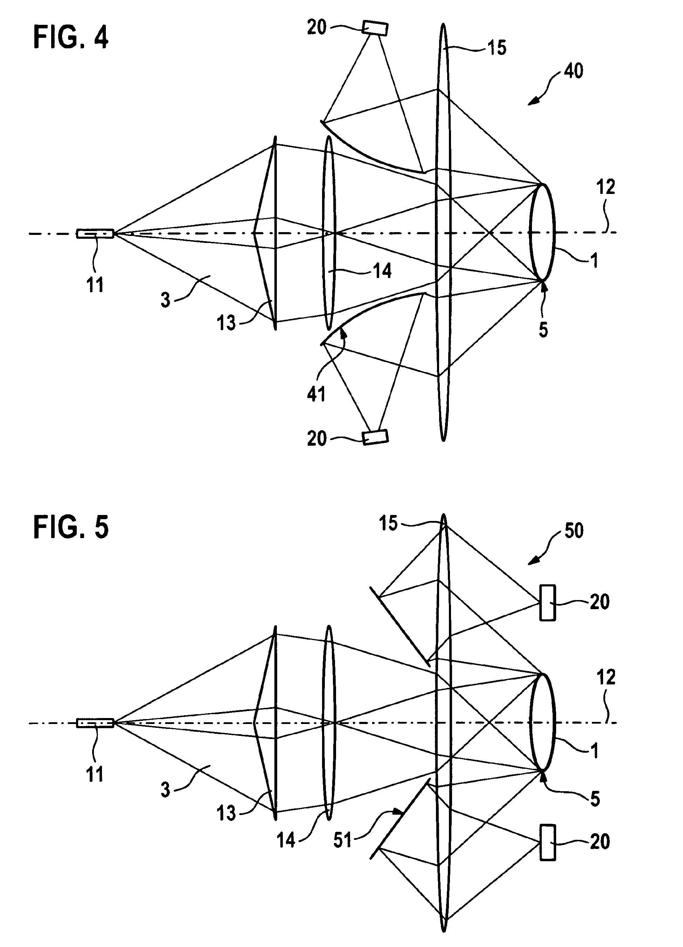

In der Fig. 4 ist eine gegenüber der Fig. 2 modifizierte Laserstrahlschweißeinrichtung 40 dargestellt. Diese umfasst anstelle eines kegelförmigen Spiegels 17 entsprechend der Fig. 2 einen konkav ausgebildeten Spiegel 41, der sich ebenfalls zwischen der Kollimationslinse 14 und der Fokusierlinse 15 befindet. Im Gegensatz zu dem Spiegel 17 entsprechend der Fig. 2 ist der Spiegel 41 entsprechend der Fig. 4 jedoch außerhalb des Strahlengangs des Laserstrahls 3 angeordnet. Mittels eines derartigen Spiegels 41 lassen sich die Laserstrahlen ohne Verwendung zusätzlicher Fokusierlinsen direkt den Sensorelementen 20 zuführen.

In der Fig. 5 ist eine nochmals modifizierte Laserstrahlschweißeinrichtung 50 dargestellt. Bei dieser ist ebenfalls ein kegelförmiger Spiegel 51 entsprechend der Fig. 2 vorgesehen, jedoch befindet sich dieser Spiegel 51, ebenso wie der Spiegel 41 bei der Laserstrahlschweißeinrichtung 40, außerhalb des Strahlengangs des Laserstrahls 3. Hierbei ist wesentlich, dass der Spiegel 51 die von der Fügezone 5 reflektierten Laserstrahlen auf die Fokusierlinse 15 zurück reflektiert, welche nach dem erneuten Passieren der Fokusierlinse 15 von radial zur Längsachse 12 angeordneten Sensorelementen 20 erfasst werden, die auf der dem Spiegel 51 gegenüberliegenden Seite der Fokussierlinse 15 angeordnet sind.

Bezüglich der Auswertestrategie bzw. der Regelstrategie der Laserstrahlschweißeinrichtungen 40 und 50 trifft das auf die Laserstrahlschweißeinrichtung 10 Erwähnte zu, das heißt auch, dass die Laserstrahlschweißeinrichtungen 40 und 50 sämtliche dafür benötigten Einrichtungen entsprechend der Laserschweißeinrichtung 10 aufweisen.

Die soweit beschriebenen Laserstrahlschweißeinrichtungen 10, 40 und 50 können in vielfältiger Art und Weise abgewandelt bzw. modifiziert werden. So ist es beispielsweise denkbar, den Laserstrahl 3 nach der Fokusierlinse 15 zusätzlich durch einen Kegelspiegel radial auf eines der Bauteile 7, 8 bzw. den Fügebereich 5 der Bauteile 7, 8 abzubilden.

## Patentansprüche

1. Laserstrahlschweißeinrichtung (10; 40; 50) zum Verschweißen von Bauteilen (7, 8), mit einer Laserstrahlquelle (11) und einer im Strahlengang des Laserstrahls (3) angeordneten Optik zur Erzeugung eines im Querschnitt ringförmig ausgebildeten Laserstahls (1, 2) und einer zusätzlichen Ablenkoptik (17; 41; 51), die den von der Fügezone (5) der Bauteile (7, 8) reflektierten Laserstrahl (3) einer Auswerteeinrichtung (25) zuführt, wobei die Auswerteeinrichtung (25) die ringförmige Fügezone (5) bereichsweise erfasst und auswertet, wobei die Auswerteeinrichtung (25) eine Vielzahl von Sensorelementen (20) aufweist, die jeweils einen Bereich der ringförmigen Fügezone (5) erfassen,
**dadurch gekennzeichnet,**
**dass** die Sensorelemente (20) radial um die zusätzliche Auslenkoptik (17; 41) angeordnet sind.

2. Laserstrahlschweißeinrichtung nach Anspruch 1,
**dadurch gekennzeichnet,**
**dass** die Auswerteeinrichtung (25) zumindest mittelbar mit einer Regeleinrichtung (26) gekoppelt ist, wobei die Regeleinrichtung (26) insbesondere eine Verstelleinrichtung (27) zur Verstellung der Optik bzw. eine Ansteuereinrichtung (28) zur Erzeugung des Laserstrahls (3) bzw. eine weitere Verstelleinrichtung (29, 31) zum Positionieren zumindest eines Bauteil (7, 8) bzw. wenigstens eine insbesondere als Blende (32) ausgebildeten Optik zur Beeinflussung des Laserstrahls (3) in einem Teilbereich seiner ringförmigen Fläche umfasst.

3. Laserstrahlschweißeinrichtung nach Anspruch 1 oder 2,
**dadurch gekennzeichnet,**
**dass** die Sensorelemente (20) Photodioden sind.

4. Laserstrahlschweißeinrichtung nach einem der Ansprüche 1 bis 3,
**dadurch gekennzeichnet,**
**dass** die zusätzliche Auslenkoptik einen kegelförmigen Spiegel (17) umfasst, dass der kegelförmige Spiegel (17) zwischen einer Kollimationslinse (14) und einer Fokusierlinse (15) der Optik angeordnet ist und, dass jedes Sensorelement (20) mit einer weiteren Fokusierlinse (19) zusammenwirkt, die radial zwischen dem kegelförmigen Spiegel (17) und dem wenigstens einen Sensorelement (20) angeordnet ist.

5. Laserstrahlschweißeinrichtung nach einem der Ansprüche 1 bis 3,
**dadurch gekennzeichnet,**
**dass** die zusätzliche Auslenkoptik einen konkav ausgebildeten Spiegel (41) umfasst, dass der konkav ausgebildete Spiegel (41) zwischen einer Kollimationslinse (14) und einer Fokusierlinse (15) der Optik angeordnet ist und, dass der konkav ausgebildete Spiegel (41) radial innerhalb des wenigstens einen Sensorelements (20) angeordnet ist.

6. Laserstrahlschweißeinrichtung nach einem der Ansprüche 1 bis 3,
**dadurch gekennzeichnet,**
**dass** die zusätzliche Auslenkoptik einen kegelförmig ausgebildeten Spiegel (51) umfasst, dass der kegelförmig ausgebildete Spiegel (51) zwischen einer Kollimationslinse (14) und einer Fokusierlinse (15) der Optik angeordnet ist, dass der kegelförmig ausgebildete Spiegel (51) die erfasste Strahlung im Bereich der Fügezone (5) auf die Fokusierlinse (15) zurückreflektiert und, dass das wenigstens eine Sensorelement (20) auf der dem Spiegel (51) gegenüberliegenden Seite der Fokusierlinse (15) angeordnet ist.

7. Verfahren zum Betreiben einer Laserstrahlschweißeinrichtung (10; 40; 50), bei der ein ringförmiger Laserstrahl (1, 2) mittels einer Optik erzeugt und in eine Fügezone (5) zweier Bauteile (7, 8) eingeleitet wird, wobei die von der Fügezone (5) reflektierte Strahlung mittels einer zusätzlichen Ablenkoptik (17; 41; 51) erfasst und einer Auswerteeinrichtung (25) zugeführt wird, wobei die Auswerteeinrichtung (25) den Bereich der ringförmigen Fügezone (5) bereichsweise erfasst und auswertet, wobei die Auswerteeinrichtung (25)
eine Vielzahl von Sensorelementen (20) aufweist, die jeweils einen Bereich der ringförmigen Fügezone (5) erfassen,
**dadurch gekennzeichnet,**
**dass** die Sensorelemente (20) radial um die zusätzliche Auslenkoptik (17; 41) angeordnet sind.

8. Verfahren nach Anspruch 7,
**dadurch gekennzeichnet,**
**dass** die Auswerteeinrichtung (25) mit Einrichtungen gekoppelt ist, die insbesondere die Zeitdauer des Betreibens des Laserstrahls (3) bzw. die Position der Bauteile (7, 8) bzw. die Optik zur Erzeugung des Laserstrahls (3) bzw. die Position wenigstens einer insbesondere als Blende (32) ausgebildeten Optik zur Beeinflussung des Laserstrahls (3) in einem Teilbereich seiner ringförmigen Fläche beeinflusst.

## Claims

1. Laser beam welding device (10; 40; 50) for welding components (7, 8), having a laser beam source (11) and an optics, arranged in the beam path of the laser beam (3), for generating a laser beam (1, 2) of annular design in cross section, and an additional deflecting optics (17; 41; 51) which feeds the laser beam (3) reflected by the joining zone (5) of the components (7, 8) to an evaluation device (25), the evaluation device (25) detecting and evaluating some areas of the annular joining zone (5), the evaluation device (25) having a multiplicity of sensor elements (20) which respectively detect an area of the annular joining zone (5), **characterized in that** the sensor elements (20) are arranged radially about the additional deflecting optics (17; 41).

2. Laser beam welding device according to Claim 1, **characterized in that** the evaluation device (25) is at least indirectly coupled to a control device (26), the control device (26) comprising, in particular, an adjusting device (27) for adjusting the optics, and/or a drive device (28) for generating the laser beam (3), and/or a further adjusting device (29, 31) for positioning at least one component (7, 8), and/or at least one optics, designed in particular as a diaphragm (32), for influencing the laser beam (3) in a subarea of its annular surface.

3. Laser beam welding device according to Claim 1 or 2, **characterized in that** the sensor elements (20) are photodiodes.

4. Laser beam welding device according to one of Claims 1 to 3, **characterized in that** the additional deflecting optics comprises a conical mirror (17), **in that** the conical mirror (17) is arranged between a collimator lens (14) and a focusing lens (15) of the optics, and **in that** each sensor element (20) cooperates with a further focusing lens (19), which is arranged radially between the conical mirror (17) and the at least one sensor element (20).

5. Laser beam welding device according to one of Claims 1 to 3, **characterized in that** the additional deflecting optics comprises a concavely designed mirror (41), **in that** the concavely designed mirror (41) is arranged between a collimator lens (14) and a focusing lens (15) of the optics, and **in that** the concavely designed mirror (41) is arranged radially inside the at least one sensor element (20).

6. Laser beam welding device according to one of Claims 1 to 3, **characterized in that** the additional deflecting optics comprises a conically designed mirror (51), **in that** the conically designed mirror (51) is arranged between a collimator lens (14) and a focusing lens (15) of the optics, **in that** the conically designed mirror (51) retroreflects the detected radiation in the area of the joining zone (5) onto the focusing lens (15), and **in that** the at least one sensor element (20) is arranged on that side of the focusing lens (15) situated opposite the mirror (51).

7. Method for operating a laser beam welding device (10; 40; 50), in which an annular laser beam (1, 2) is generated by means of an optics and led into a joining zone (5) of two components (7, 8), the radiation reflected by the joining zone (5) being detected by means of an additional deflecting optics (17; 41; 51) and fed to an evaluation device (25), the evaluation device (25) detecting and evaluating some areas of the region of the annular joining zone (5), the evaluation device (25) having a multiplicity of sensor elements (20) which respectively detect an area of the annular joining zone (5), **characterized in that** the sensor elements (20) are arranged radially about the additional deflecting optics (17; 41).

8. Method according to Claim 7, **characterized in that** the evaluation device (25) is coupled to devices which influence, in particular, the duration of the operation of the laser beam (3), and/or the position of the components (7, 8), and/or the optics for generating the laser beam (3), and/or the position of at least one optics, designed as a diaphragm (32), in particular, for influencing the laser beam (3) in a subarea of its annular surface.

## Revendications

1. Dispositif de soudage à rayon laser (10 ; 40 ; 50) pour souder des composants (7, 8), comprenant une source de rayon laser (11) et une optique disposée dans le trajet de rayon du rayon laser (3) pour générer un rayon laser (1, 2) ayant une section transversale de forme annulaire et une optique de déviation (17 ; 41 ; 51) supplémentaire, laquelle achemine le rayon laser (3) réfléchi par la zone de jonction (5) des composants (7, 8) à un dispositif d'interprétation (25), le dispositif d'interprétation (25) détectant et interprétant zone par zone la zone de jonction (5) de forme annulaire, le dispositif d'interprétation (25) présentant une pluralité d'éléments de détection (20) qui détectent respectivement une zone de la zone de jonction (5) de forme annulaire,
**caractérisé en ce**
**que** les éléments de détection (20) sont disposés dans le sens radial autour de l'optique de déviation (17 ; 41) supplémentaire.

2. Dispositif de soudage à rayon laser selon la revendication 1, **caractérisé en ce que** le dispositif d'interprétation (25) est couplé au moins indirectement avec un dispositif de régulation (26), le dispositif de régulation (26) comprenant notamment un dispositif de positionnement (27) pour positionner l'optique ou un dispositif d'excitation (28) pour générer le rayon laser (3) ou un dispositif de positionnement supplémentaire (29, 31) pour positionner au moins un composant (7, 8) ou au moins une optique notamment réalisée sous la forme d'un obturateur (32) pour influencer le rayon laser (3) dans une zone partielle de sa surface de forme annulaire.

3. Dispositif de soudage à rayon laser selon la revendication 1 ou 2, **caractérisé en ce que** les éléments de détection (20) sont des photodiodes.

4. Dispositif de soudage à rayon laser selon l'une des revendications 1 à 3, **caractérisé en ce que** l'optique de déviation supplémentaire comprend un miroir de forme conique (17), **en ce que** le miroir de forme conique (17) est disposé entre une lentille de collimation (14) et une lentille de concentration (15) de l'optique et **en ce que** chaque élément de détection (20) interagit avec une lentille de concentration supplémentaire (19) qui est disposée dans le sens radial entre le miroir de forme conique (17) et l'au moins un élément de détection (20).

5. Dispositif de soudage à rayon laser selon l'une des revendications 1 à 3, **caractérisé en ce que** l'optique de déviation supplémentaire comprend un miroir de configuration concave (41), **en ce que** le miroir de configuration concave (41) est disposé entre une lentille de collimation (14) et une lentille de concentration (15) de l'optique et **en ce que** le miroir de configuration concave (41) est disposé dans le sens radial à l'intérieur de l'au moins un élément de détection (20).

6. Dispositif de soudage à rayon laser selon l'une des revendications 1 à 3, **caractérisé en ce que** l'optique de déviation supplémentaire comprend un miroir à configuration conique (51), **en ce que** le miroir à configuration conique (51) est disposé entre une lentille de collimation (14) et une lentille de concentration (15) de l'optique, **en ce que** le miroir à configuration conique (51) réfléchit en arrière sur la lentille de concentration (15) le rayonnement capté dans la zone de la zone de jonction (5) et **en ce qu'**au moins un élément de détection (20) est disposé sur le côté de la lentille de concentration (15) qui est à l'opposé du miroir (51).

7. Procédé pour faire fonctionner un dispositif de soudage à rayon laser (10 ; 40 ; 50), selon lequel un rayon laser (1, 2) de forme annulaire est généré au moyen d'une optique et introduit dans une zone de jonction (5) de deux composants (7, 8), le rayonnement réfléchi par la zone de jonction (5) étant détecté au moyen d'une optique de déviation (17 ; 41 ; 51) supplémentaire et acheminé à un dispositif d'interprétation (25), le dispositif d'interprétation (25) détectant et interprétant zone par zone la zone de la zone de jonction (5) de forme annulaire, le dispositif d'interprétation (25) présentant une pluralité d'éléments de détection (20) qui détectent respectivement une zone de la zone de jonction (5) de forme annulaire,
**caractérisé en ce**
**que** les éléments de détection (20) sont disposés dans le sens radial autour de l'optique de déviation (17 ; 41) supplémentaire.

8. Procédé selon la revendication 7, **caractérisé en ce que** le dispositif d'interprétation (25) est couplé avec des dispositifs qui influencent notamment la durée de fonctionnement du rayon laser (3) ou la position des composants (7, 8) ou l'optique pour générer le rayon laser (3) ou la position d'au moins une optique notamment réalisée sous la forme d'un obturateur (32) pour influencer le rayon laser (3) dans une zone partielle de sa surface de forme annulaire.
